# EUROPEAN PATENT APPLICATION

(11) **EP 4 711 083 A2**
(43) Date of publication of application: **18.03.2026**
(21) Application number: 26155646.8
(22) Date of filing: 26.01.2021
(51) Int. Cl.: B24D 3/34

(54) **BONDED ABRASIVE COMPOSITION**

(30) Priority: 31.01.2020 US 202062968342 P
(62) Divisional of application: 21702722.6
(71) Applicant: 3M Innovative Properties Co., St. Paul, MN 55133-3427 (US)
(72) Inventor: The designation of the inventor has not yet been filed
(74) Representative: Vossius & Partner Patentanwälte Rechtsanwälte mbB

(57) **Abstract**

A precursor abrasive structure for use in forming a bonded abrasive article, the precursor abrasive structure including: abrasive particles; a binder medium; and a pore inducing material, wherein the pore inducing material is not flammable and is substantially insoluble in water.

## Description

### Background

The present disclosure relates to bonded abrasive articles such as grinding wheels and the like. More particularly, it relates to methods of making bonded abrasive articles, including formation of pores in the resultant bonded abrasive article.

Bonded abrasive articles useful for abrasive machining and other operations are three-dimensional in structure and typically include a shaped mass of abrasive particles, fillers and other material bonded together by a binder. Such shaped mass can be, for example, in the form of a cylinder or wheel, such as a grinding wheel, cut-off wheel, etc. The main types of bonding systems used to make bonded abrasive articles are: vitrified, resinoid, and metal. With vitrified bonded abrasive articles, such as vitrified grinding wheels, a vitreous binder medium or system is used to bond the abrasive particles together. These bonds are usually vitrified at temperatures between 500 °C to 1500 °C. Resinoid bonded abrasives utilize an organic binder system (e.g., phenolic binder systems) to bond the abrasive particles together to form the shaped mass. Metal bonded abrasive articles typically utilize sintered or plated metal to bond the abrasive particles. Vitrified bonded abrasive articles are different from resinoid bonded abrasive particles in that they use a vitreous phase to bond the abrasive grains and thus are processed at substantially higher temperatures. Vitrified bonded abrasive articles can withstand higher temperatures in use and are generally more rigid and brittle than resinoid bonded wheels. Vitrified bonded abrasive articles are well-suited for precision machining.

It has been found that the cutting characteristics of bonded abrasive articles, such as vitrified bonded grinding wheels, can benefit from the inclusion or formation of pores. Bonded abrasive articles containing or exhibiting porosity have an open structure (interlinked or interconnected porosity) that can provide chip clearance for high material removal and can transport more coolant into the contact area while decreasing friction. Absent adequate porosity and spacing between abrasive grains, the bonded abrasive article can become loaded with chips and cease to cut as expected. Also, porosity can facilitate a self-sharpening attribute, enabling a bonded abrasive article to shed used or worn abrasive particles to expose new cutting edges or fresh abrasive particles.

A certain level of porosity may naturally occur when packing or molding the abrasive particles and binder medium under pressure. However, this natural porosity is typically not sufficient for several end user applications. As such, pore inducing components or additives are included with the vitreous bonding abrasive composition or mixture. Pore inducing components or additives can be non-temporary (i.e., components present in the abrasive composition and in the final bonded abrasive article), temporary (i.e., components present in the abrasive composition but not present in the final bonded abrasive article), and combinations thereof. Typical non-temporary pore inducing components include hollow glass spheres and hollow ceramic spheres. Typical temporary pore inducing components include cork, ground walnut shells, wood particles, and polymeric materials. These temporary pore inducing components are burnt out of the abrasive matrix as part of the vitrified abrasive bonded article manufacturing process.

While ground shells, wood particles, and the like are viable temporary pore inducing materials, but they tend to have variability in supply and raise concerns with open fires with the kiln since the material does not sublime. Many polymeric materials are elastic in nature and experience spring-back that in turn can make it difficult to predict or precisely control a geometry of the resultant vitrified bonded abrasive article after firing. Naphthalene is another well-known temporary pore inducing material that does not present these same spring-back concerns. While more commonly known as the main ingredient of traditional moth balls, the physical and material properties of naphthalene are well-suited to the vitrified abrasive bonded article methods of manufacture. Naphthalene can be readily shaped to create pores of a desired size, does not react with conventional vitreous bonding materials or abrasive grit, and exhibits little or no volume change under expected pressures or pressing conditions. Further, naphthalene readily sublimates and/or melts and evaporates at the temperatures (and pressures) of the vitrified bonding process, and thus is cleanly removed from the resultant bonded abrasive article. However, naphthalene is viewed as possibly carcinogenic to humans and animals and is not pleasant to work with. Moreover, various governmental agencies have established (or are considering) rigorous naphthalene exposure limits that may effectively render it un-usable for the mass production of vitrified bonded abrasive articles.

In light of the above, a need exists for methods of manufacturing bonded abrasive articles, such as vitrified bonded abrasive articles, with porosity induced by environmentally benign materials otherwise exhibiting the process control attributes of naphthalene and properties of the sintered abrasive product obtained from naphthalene.

### Brief Description of the Drawings

FIG. 1A and 1B illustrate a method of manufacturing a bonded abrasive article in an embodiment of the present invention.
FIGS. 2A and 2B illustrate views of a bonded abrasive article and its use according to embodiments of the present invention.
FIGS. 3A-3G illustrate chemical formulas of pore forming compounds in embodiments of the present invention.
FIGS. 4A and 4B illustrate TGA analysis for a variety of potential pore forming compounds.
FIG. 5 illustrates DSC analysis for pore forming components in embodiments of the present invention.
FIGS. 6A and 6B illustrate images of bonded abrasive articles in accordance with the present invention.
FIGS. 7A-7D illustrate discrete pores visible in bonded abrasive articles in accordance with the present invention.

### Detailed Description

Aspects of the present disclosure relate to methods of manufacturing bonded abrasive articles, precursor abrasive structures generated during the manufacturing process, and resultant bonded abrasive articles. In general terms, manufacturing methods of the present disclosure entail incorporating a pore inducing material into a bondable abrasive composition, forming (e.g., pressing) the bondable abrasive composition to a desired shape so as to obtain a precursor abrasive structure (e.g., a "green" body), processing the precursor abrasive structure to remove (e.g., sublimation and/or melt and evaporate) the pore inducing material so as to obtain a porous precursor abrasive structure, and processing the porous precursor abrasive structure to effectuate formation of a bonded abrasive article. The processing steps associated with transitioning of the precursor abrasive structure to a bonded abrasive article can be tailored to the particular bonding agent employed. Regardless, the techniques of the present disclosure enable the facile, controlled, environmentally benign induction of porosity into the resultant bonded abrasive article with little or no volume change during processing of the precursor abrasive structure. Techniques of the present disclosure are particularly useful with the manufacture of vitrified bonded abrasive articles but are also applicable to other abrasive article bonding formats such as resinoid and metal. Thus, while vitreous bonding examples are discussed below, the present disclosure is in no way limited to vitrified bonded abrasive articles. Moreover, the bonded abrasive articles of the present disclosure can assume various forms, and in some embodiments are suitable for the machining and finishing of metals and other materials, such as grinding wheels, cut-off wheels, hones, whet stones and the like.

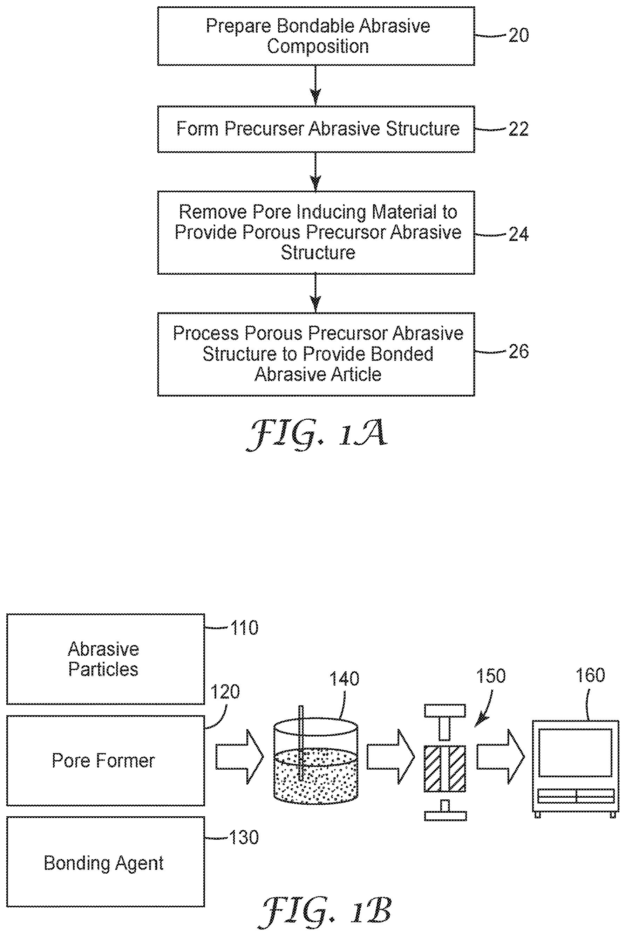

FIG. 1A is a flow diagram illustrating techniques of the present disclosure for manufacturing bonded abrasive articles. At 20, a bondable abrasive composition is prepared, for example by mixing together the components or ingredients described below. In general terms, the bondable abrasive compositions of the present disclosure include abrasive particles, a bonding or binder medium, and pore inducing material. The particular type and quantity of the abrasive particles and the binder medium are not critical to the present disclosure so long as they possess the desired abrasive and binding properties, respectively, for the intended end use of the final bonded abrasive article. Aspects of the present disclosure reside in a selection of the pore inducing material. Thus, pore inducing materials of the present disclosure are initially discussed below, followed by exemplary identifications of abrasive particles, binder mediums, and other optional bondable abrasive composition ingredients.

Currently, naphthalene is used in the industry as a pore former. Naphthalene has been a preferred pore former because it is easy to remove and is completely removed by the firing process. Unfortunately, naphthalene is also a known carcinogen, is toxic, and is a flammable solid. For these reasons, its use is increasingly limited. A search has been conducted for a suitable pore forming chemical that can replace naphthalene. The pore former must be commercially available, substantially nontoxic and environmentally friendly, not flammable, have no reactive byproducts formed during heating, no or low solubility in water or aqueous or nonaqueous binder system used in forming bonded abrasives. The pore former must also experience minimal spring back after the pressing process. The pore former must also be completely removed during the firing process before temperatures reach the glass frit melting range of 700°C. Ideally, the pore former also is composed of only carbon, hydrogen and oxygen atoms so that a clean decomposition to carbon dioxide and water is possible.

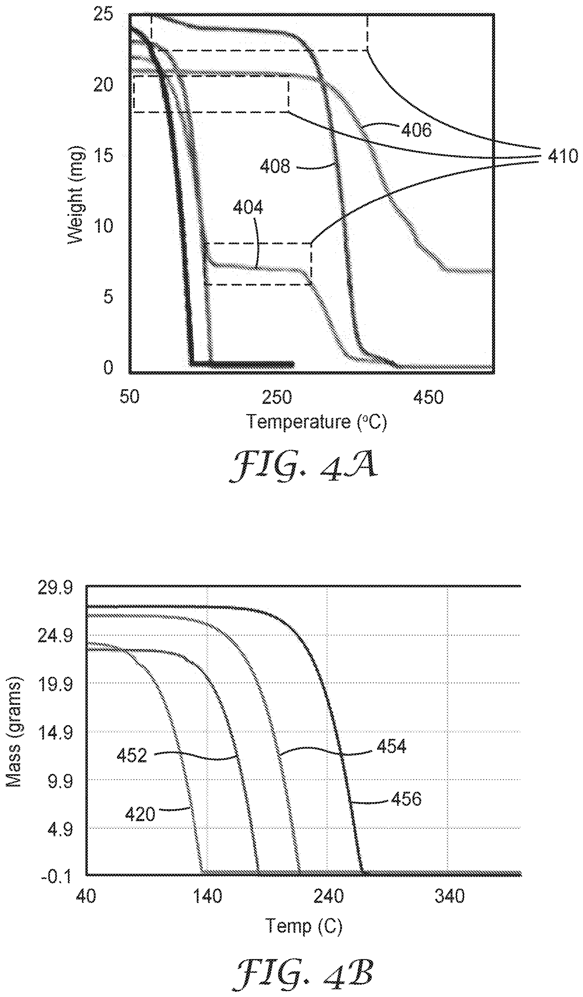

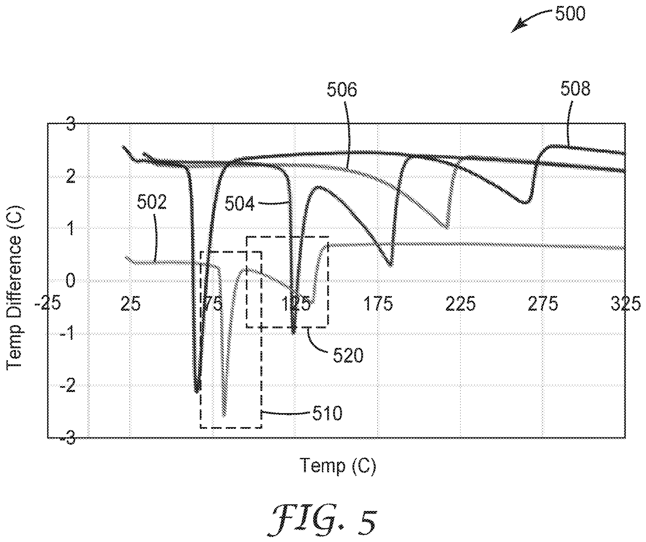

Previous attempts at finding a replacement for naphthalene as a pore former have focused on finding a compound that sublimes as it was believed that sublimation was the main removal mechanism for naphthalene in bonded abrasive article formation. However, referring to FIG. 5, Differential Scanning Calorimetry (DSC) data reveals that, while naphthalene does experience an initial sublimation, it also experiences a second removal mechanism as well. FIGS. 4A and 4B show Thermal Gravimetric Analysis (TGA) data for naphthalene, and illustrate that, during the initial sublimation event, only a small portion is removed, while most was removed during later endothermic events, ie. melting and evaporation.

Therefore, a replacement pore former for naphthalene does not need to be a compound that sublimes. This opened up a large number of potential compounds to explore for compliance with the requirements listed above. Waxes, such as polyethylene waxes, paraffins, polyvinyl ether, ethylene-bis-stearamid, and behenamide were tested, but all experienced unacceptable springback, adhesive effect and energy release to serve as a suitable pore former. Plastics were reviewed, such as polypropylene fibers, expanded polystyrene, polyethylene, poly(propylene carbonate), polymethylmethacrylate, silicone, phenyl silicone, silicone intermediates, melamin formaldehyde resin, resole foam and polyurethane foams. However, processability concerns, unacceptable spring back, and incomplete decomposition were experienced, making these compounds unacceptable. Organic compounds were also reviewed, including neopentyl glycol, n-butylcarbamate, hexamethylene tetramine, polyvinyl alcohol, balsam resin, ammonium oxalate, and camphor, however these were eliminated due to processability, compound consistency, hydrolyzation and cracking in produced wheels. Some inorganic compounds were also reviewed, including sodium bicarbonate, ammonium bicarbonate, and graphite, but these were eliminated for instability at room temperature and processability concerns. Native organic compounds were also tested, such as charcoal, wood wool chips, olive kernels, millet, pasta, sugar, and cellulose fibers, but were eliminated for processability, incomplete decomposition, solubility in water or springback concerns. Minerals were also tested, including foam glass, crude perlite, sintered perlite, glass beads and bubble alumina, however these were eliminated for change in composition and bonding concerns.

Additionally, a pore forming material is desired that is safer for worker use. Naphthalene, for example, has a LD₅₀ (mean lethal dose, in mg/kg) of 490. A higher LD₅₀ number indicates a generally safer compound. Several compounds were rejected for having a lethality near, or greater, than naphthalene. Pore forming compounds of embodiments discussed herein have an LD₅₀ higher than naphthalene, at least 500 or higher. In some embodiments, a pore forming compound has an LD₅₀ of at least 600, or at least 700, or at least 800, or at least 900, or at least 1,000, or at least 1,500, or at least 2,000, or at least 2500, or at least 5000, or at least 10,000.

The pore inducing materials described herein are environmentally benign. Naphthalene does not satisfy this criterion. Second, the pore inducing material does not react with the selected abrasive particles, bonding medium, or other ingredients employed with the bondable abrasive composition. Third, the pore inducing materials are able to induce or create pores of a specific size. Fourth, the pore inducing materials exhibit acceptable springback during the precursor abrasive structure formation step (e.g., pressing). The pore inducing materials are cleanly removed without any residue. Finally, the pore inducing material has little or no water solubility.

Returning to FIG. 1A, the abrasive particle component of the bondable abrasive composition (step 20) can assume various forms as known to those of ordinary skill and otherwise appropriate for bonded abrasive articles. For example, the abrasive particles can be or include abrasive grains formed of a hard material (e.g., Mohs hardness of at least about 7). The abrasive particles can include a combination of different types of abrasive particulate materials. The abrasive particles can include abrasive agglomerates, unagglomerated abrasive particles, and combinations thereof. In some embodiments, the abrasive particles can include or be made of inorganic material such as carbides, oxides, nitrides, borides, and combinations thereof. In some embodiments, the abrasive particles can be or include a superabrasive particulate material such as diamond or cubic boron nitride. In some embodiments, the abrasive particles can include or comprise ceramic particles, composed, for example, of crystallites of alpha alumina, magnesium alumina spinel, and a rare earth hexagonal aluminate prepared using sol-gel precursor alpha alumina particles. Other non-limiting examples of useful abrasive particles include, but are not limited to, fused aluminum oxide, treated aluminum oxide, white fused aluminum oxide, ceramic aluminum oxide materials such as those commercially available under the trade designation 3M CERAMIC ABRASIVE GRAIN from 3M Company of St. Paul, MN, black silicon carbide, green silicon carbide, titanium diboride, boron carbide, tungsten carbide, titanium carbide, garnet, fused alumina zirconia, sol-gel derived abrasive particles, iron oxide, chromia, ceria, zirconia, titania, silicates, tin oxide, silica (such as quartz, glass beads, glass bubbles, and glass fibers), silicates (such as talc, clays (e.g., montmorillonite), feldspar, mica, calcium silicate, calcium metasilicate, sodium aluminosilicate, sodium silicate), flint, and emery. The abrasive particles can be or include crushed particulates and/or shaped particles (e.g., ceramic shaped abrasive particles). The abrasive particles can be coated (e.g., coated with a coupling agent).

As mentioned above, the bonding medium of the bondable abrasive composition assume various forms as known to those of ordinary skill and otherwise appropriate for bonded abrasive articles. The binder material typically comprises a glassy inorganic material (e.g., as in the case of vitrified bonded abrasive articles), metal, or an organic resin (e.g., as in the case of resin-bonded abrasive articles).

In some embodiments, techniques of the present disclosure are beneficial with vitrified bond processing, with the bonding medium comprising a vitreous (also referred to as vitrified) bonding material or bond phase. The vitreous bonding material serves to retain the abrasive particles in the composition or in the article. The vitreous bond phase that binds together the abrasive particles can be of any suitable composition.

The vitreous bond phase, also known in the art as a "vitrified bond", "vitreous bond", "ceramic bond" or "glass bond", may be produced from a vitreous bond precursor composition comprising a mixture or combination of one or more raw materials that when heated to a high temperature melt and/or fuse to form an integral vitreous matrix phase.

The raw materials are not particularly limited. Typical raw materials for forming a vitreous bond phase can be selected from metal oxides (including metalloid oxides), non-metal oxides, non-metal compounds, silicates and naturally occurring and synthetic materials, and combinations of one or more of these raw materials.

Metal oxide vitreous binders can, for example, be selected from silicon oxide, magnesium oxide, calcium oxide, barium oxide, lithium oxide, sodium oxide, potassium oxide, iron oxide, titanium oxide, manganese oxide, zinc oxide, and metal oxides that can be characterized as pigments such as cobalt oxide, chromium oxide, or iron oxide, and combinations thereof.

Non-metal oxides can, for example, be selected from boron oxide, phosphorous oxide and combinations thereof. Suitable examples of non-metal compounds include boric acid.

Silicates can, for example, be selected from aluminum silicates, borosilicates, calcium silicates, magnesium silicates, sodium silicates, lithium silicates, and combinations thereof.

Minerals can, for example, be selected from clay, feldspar, kaolin, wollastonite, borax, quartz, soda ash, limestone, dolomite, chalk, and combinations thereof.

During manufacture of a vitrified bonded abrasive article, the vitreous binder, in a powder form, may be mixed with a temporary binder, typically an organic binder. The vitrified binders may also be from a frit, for example anywhere from about 1 to 100 percent frit, but generally 20 to 100 percent frit. A frit is a composition that has been pre-fired prior to its employment in a vitreous bond precursor composition for forming the vitreous bond phase of a bonded abrasive article. As used herein, the term "frit" is a generic term for a material that is formed by thoroughly blending a mixture comprising one or more frit forming components, followed by heating (also referred to as pre-firing) the mixture to a temperature at least high enough to melt it; cooling the glass and pulverizing it. Some examples of common materials used in frit binders include feldspar, borax, quartz, soda ash, zinc oxide, whiting, antimony trioxide, titanium dioxide, sodium silicofluoride, flint, cryolite, boric acid, and combinations thereof. These materials are usually mixed together as powders, fired to fuse the mixture, and then the fused mixture is cooled. The cooled mixture is crushed and screened to a very fine powder to then be used as a first binder. The temperature at which these frit bonds are matured is dependent upon its chemistry, but may range from anywhere from about 600 °C to about 1800 °C.

Non-limiting examples of suitable ranges for vitreous bonding materials or compositions (for use with the bondable abrasive compositions of the present disclosure) can be specified as follows: 25 to 90% be weight, optionally 35 to 85% by weight, based on the total weight of the vitreous bonding material, of SiO₂; 0 to 40% by weight, optionally 0 to 30% by weight, based on the total weight of the vitreous bonding material, of B₂O₃; 0 to 40% by weight, optionally 5 to 30% by weight, based on the total weight of the vitreous bonding material, of Al₂O₃; 0 to 5% by weight, optionally 0 to 3% by weight, based on the total weight of the vitreous bonding material, of Fe₂O₃; 0 to 5% by weight, optionally 0 to 3% by weight, based on the total weight of the vitreous bonding material, of TiO₂; 0 to 20% by weight, optionally 0 to 10% by weight, based on the total weight of the vitreous bonding material, of CaO; 0 to 20% by weight, optionally 1 to 10% by weight, based on the total weight of the vitreous bond, of MgO; 0 to 20% by weight, optionally 0 to 10% by weight, based on the total weight of the vitreous bonding material, of K₂O; 0 to 25% by weight, optionally 0 to 15% by weight, based on the total weight of the vitreous bonding material, of Na₂O; 0 to 20% by weight, optionally 0 to 12% by weight, based on the total weight of the vitreous bonding material, of Li₂O; 0 to 10% by weight, optionally 0 to 3% by weight, based on the total weight of the vitreous bonding material, of ZnO; 0 to 10% by weight, optionally 0 to 3% by weight, based on the total weight of the vitreous bonding material, of BaO; and 0 to 5% by weight, optionally 0 to 3% by weight, based on the total weight of the vitreous bonding material, of metallic oxides (e.g., CoO, Cr₂O₃ or other pigments). Other specific, non-limiting examples of a vitreous binder useful with methods and systems of the present disclosure include, based upon weight, 47.61% SiO₂, 16.65% Al₂O₃, 0.38% Fe₂O₃, 0.35% TiO₂, 1.58% CaO, 0.10% MgO₃, 9.63% Na₂O, 2.86% K₂O, 1.77% Li₂O, 19.03% B₂0₃, 0.02% MnO₂, and 0.22% P₂0₅; and 63% SiO₂, 12% Al₂O₃, 1.2% CaO, 6.3% Na₂O, 7.5% K₂0, and 10% B₂O₃. Still other non-limiting examples of vitreous binders useful with the present disclosure based upon a molar ratio include 3.77% SiO₂, 0/58% Al₂O₃, 0.01% Fe₂0₃, 0.03% TiO₂, 0.21%CaO, 0.25% MgO, 0.47% Na₂O, and 0.07% K₂O.

In some embodiments, a vitreous binder-format of the bonding medium can include various additives as known in the art both to assist in the making of the abrasive article and/or improve the performance of such articles. Such conventional additives that may also be used in accordance with the present disclosure include, but are not limited to, lubricants, fillers, temporary binders, and processing aids. Organic binders are optionally used as temporary binders. Typical temporary binders include dextrins, urea resins (include urea formaldehyde resins), polysaccharides, polyethylene glycol, polyacrylates, and any other type of glue, etc. These binders may also include a liquid component, such as water or polyethylene glycol, viscosity or pH modifiers or mixing aids. The use of temporary binders may improve homogeneity and the structural quality of the pre-fired or green pressed body, as well as of the fired article. Because the temporary binders are burned out during firing, they do not become part of the final or finished bonded abrasive article.

While aspects of the present disclosure are highly useful with the manufacture of vitrified bonded abrasive articles, other bonding formats are also envisioned. Thus, the bonding medium of the bondable abrasive composition can alternatively include a metal binder (e.g., tin, copper, aluminum, nickel, etc.) or organic resin as known in the art to be useful for resin-bonded abrasive articles.

Regardless of the exact format, the selected ingredients are mixed at 20 to prepare the bondable abrasive composition. The mixing procedures may employ conventional equipment known in the art. At 22, the bondable abrasive composition is formed to a desired shape so as to obtain the precursor abrasive structure (e.g., a green structure). Forming can for example be accomplished by molding with or without pressing. Typical forming pressures can vary within wide ranges and may be selected from pressures ranging from 0 to 400 kg/cm³, depending on the make-up of the bondable abrasive composition and desired characteristics of the resultant precursor abrasive structure. The precursor abrasive structures of the present disclosure include a pore inducing material, a vitreous bonding medium, and abrasive particles, and does not include naphthalene. The pore inducing material must satisfy the requirements described herein.

The pore inducing material is removed from the precursor abrasive structure so as to obtain a porous precursor abrasive structure at 24. The processing necessary to accomplish removal of the pore inducing material can be a function of the pore inducing material composition and other properties, and in some embodiments entails subjecting the precursor abrasive structure to heat (e.g., temperature above room temperature) for a dwell time sufficient to effectuate sublimation, boiling, burning or evaporation of the pore inducing material. In related embodiments, the pore inducing material can be removed by subjecting the precursor abrasive structure to increasing heated conditions in various stages. For example, the precursor abrasive structure can be subjected to heated conditions at temperatures in a first range for a first period of time, and subsequently to a further elevated temperature range for a second period of time. Other temperature and/or dwell time conditions are also envisioned appropriate to achieve complete removal of the pore inducing material from the precursor abrasive structure. Regardless, openings or pores remain in the structure following removal of the pore inducing material.

At 26, the porous precursor abrasive structure is processed to effectuate formation of the bonded abrasive article. The process parameters appropriate to achieve complete bonding or binding are selected in accordance with the specific bonding format. For example, with vitrified bonded abrasive articles, the porous precursor abrasive structure is heated or "fired" at high temperatures. The vitreous bond phase is usually produced in the firing step, typically at temperatures in the range from about 700 °C to about 1500 °C, optionally in the range from about 750 °C to about 1350 °C, optionally in the range from about 800 °C to about 1300 °C. Good results may also be obtained at temperatures of about 1000 °C or less, or from about 1100 °C to about 1200 °C in some embodiments. The actual temperature at which the vitreous bond phase is formed depends, for example, on the particular bond chemistry. Firing of the vitreous bond composition is typically accomplished by raising the temperature from room temperature to the maximum temperature over a prolonged period of time (e.g., about 10 - 130 hours), holding at the maximum temperature (e.g., for about 1 - 20 hours), and then cooling the fired article to room temperatures over an extended period of time (e.g., about 10 - 140 hours). It should be understood that the temperature selected for the firing step and the composition of the vitreous bonding medium should be chosen so as to not have a detrimental effect on the physical properties and/or composition of the abrasive particles contained in the bondable abrasive composition or the final bonded abrasive article. Differing processing conditions can be employed with metal binding medium or organic resin binding medium as are known to those of ordinary skill.

Consistent with the above explanations, while the techniques of FIG. 1A reflect the removal of the pore inducing material (step 24) and the subsequent processing at step 26 as being distinct operations, in other embodiments, the "steps" can be combined. Namely, the precursor abrasive structure is subjected to elevated temperatures over an extended period of time sufficient to achieve a vitrified bond; as the precursor abrasive structure experiences the initial stages of this heating or firing process, the pore inducing material sublimes and/or melts and evaporates out of the structure.

The resultant bonded abrasive articles can assume various forms and can exhibit various properties. For example, the bonded abrasive article can be a grinding wheel, a cut-off wheel, a hone, a whet stone and the like. In some non-limiting examples, the amount of abrasive particles in the bonded abrasive article may vary widely and can range, for example, from 10 to 80%, optionally from 25 to 65%. The abrasive particles can be homogeneously or non-homogeneously distributed in the bonded abrasive article. The amount of bonding medium may also vary widely and can range, for example, from 1 to 60% by volume, optionally 2.5 to 40% by volume. In some embodiments, the bonded abrasive article has a density of at least 1.20 g/cm³, optionally at least 1.30 g/cm³, optionally a density in the range of from 1.35 to 2.65 g/cm³. The bonded abrasive article can have any useful range of porosity; in some embodiments, the bonded abrasive article has a porosity of from about 5 to about 80% by volume, optionally from about 20 to about 70% by volume. The particular design of the bonded abrasive article is not limited and can be selected from "monolithic" designs and "zonal" designs (such as segmented and layered designs). Both designs can include reinforcing materials (e.g., reinforcing the center bore of a wheel-type bonded abrasive article), such as a glue or thermosetting resin, for example resins selected from epoxy resins, polycondensates, and phenolic resins.

As illustrated in FIG. 1B, a bonded abrasive article is formed in essentially three steps. Abrasive particles 110, pore forming compound 120 and a bonding agent 130 are mixed together, in a mixer 140, for example. The mixture is then put into a mold 150 and pressed to a defined volume. The mixture may also be heated in an oven 160. Heating may also be applied during the pressing step in mold 150, in some embodiments. Mold 150 has a cavity that the mixture fills, and the cavity essentially corresponds to the final dimensions of the finished abrasive wheels. One of the issues with tested pore formers is the springback experienced after the finished product is released from the mold.

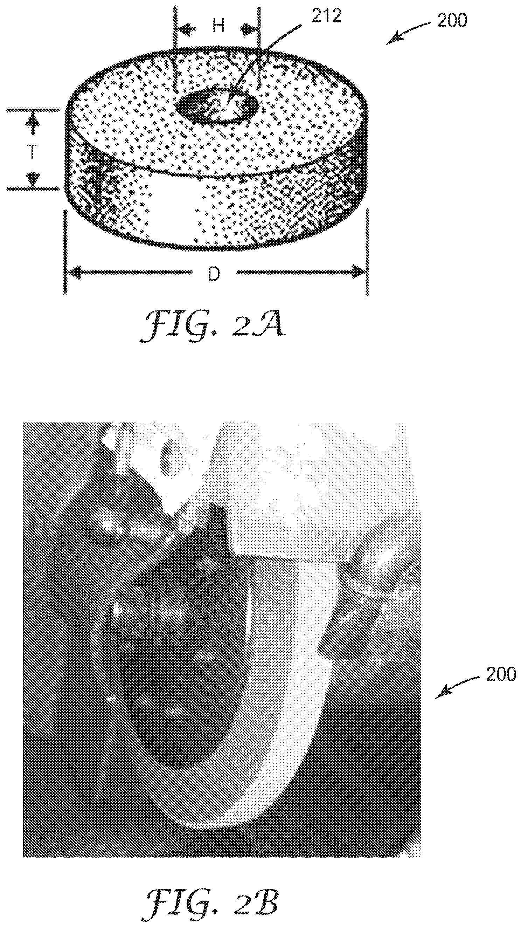

FIGS. 2A and 2B illustrate views of a bonded abrasive article in embodiments of the present invention. Referring now to FIG. 2A, exemplary bonded abrasive cut-off wheel 200 according to one embodiment of the present disclosure has center hole 212 used for attaching cut-off wheel 200 to, for example, a power-driven tool. Cut-off wheel 200 includes ceramic shaped abrasive particles 220, optional conventionally crushed and / or precision shaped abrasive. Cut-off wheel 200 has a diameter, D, a thickness T, and a hole diameter H.

FIG. 2B is a view of a cut-off wheel 200 mounted for an abrasive operation.

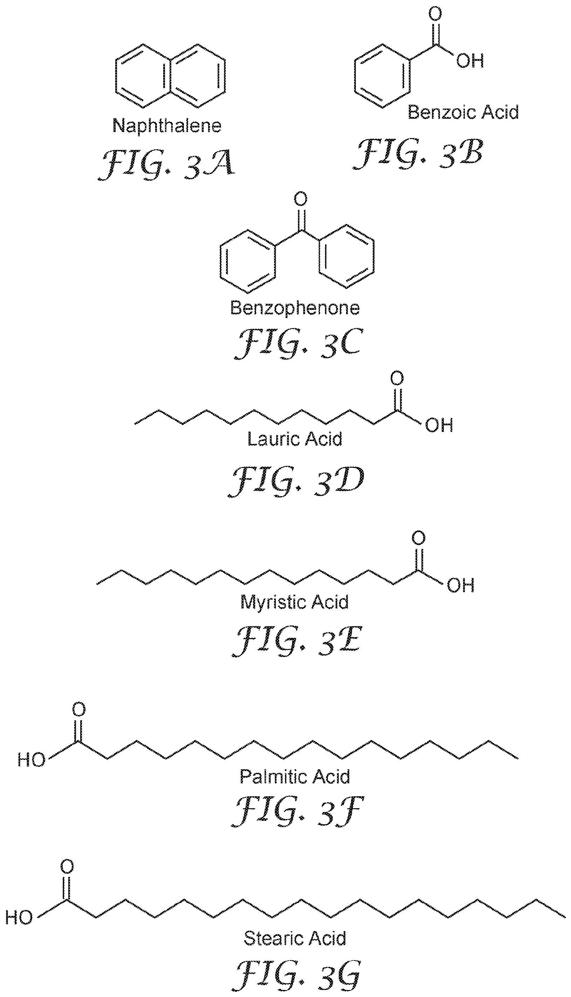

FIGS. 3A-3G illustrate chemical formulas of pore forming compounds in embodiments of the present invention. FIG. 3A illustrates the chemical formula of naphthalene, C₁₀Hs. As mentioned above, naphthalene has been a standard compound for pore formers because it cleanly burns out with no residue, is a cost effective compound with a low boiling point. However, due to its toxicity and flammability, a suitable replacement molecule has been sought. Several potential compounds are illustrated in FIGS. 3B-3G.

FIG. 3B illustrates a ketone, benzophenone (C₁₃H₁₀O) is a compound used in sunscreens and is readily obtainable.

FIGS. 3C-3G illustrate a plurality of monocarboxylic acids. FIG. 3C illustrates an aromatic monocarboxylic acid, benzoic acid (C₇H₆O₂), which is used in food chemistry. FIGS. 3D-3G illustrate several aliphatic monocarboxylic acids. These saturated fatty acids can be found in soaps and other products. FIG. 3D illustrates lauric acid (C₁₂H₂₄O₂), which can be found in coconut milk and oil. FIG. 3E illustrates myristic acid (C₁₄H₂₈O₂), which can be found in coconut oil, butter fat and milk. FIG. 3F illustrates palmitic acid (C₁₆H₃₂O₂), which can be found in palm oil. FIG. 3G illustrates stearic acid (C₁₈H₃₆O₂), which can be found in animal and vegetable fat.

The TGA and DSC analysis illustrated in FIGS. 4-5 was completed such that 15 mg of a pure sample of each pore former material was added to a ceramic crucible and placed inside of a simultaneous thermogravimetric (TGA) / differential scanning calorimetry (DSC) thermal analyzer. The heating rate was set to 3 °C / min from 25 °C to 500 °C under an oxygen atmosphere. The crucible was then cooled to room temperature and visually inspected for complete removal of material. The resulting data was exported into Excel and plotted.

FIGS. 4A and 4B illustrate TGA for a variety of potential pore forming compounds. FIG. 4A illustrates a TGA analysis 400 of a plurality of compounds. Naphthalene 420 and ethyl maltol 402 have a sharp curve with no intermediate plateaus 410. The sharp curve is indicative of a single burnoff event for a large portion of the mass of the pore forming compounds. Other compounds were also tested, such as an ethyl maltol-acrylic mixture 404, an acrylic 408, walnut shells 406, and other acrylic compounds.

FIG. 4B illustrates TGA analysis for naphthalene 420 and the pore formers described herein. All data was collected with a temperature ramp of 3 °C / min. Similar to naphthalene, the TGA curves of benzoic acid 452, benzophenone 454 and palmitic acid 456 demonstrate a sharp decrease in mass towards 0 grams, without any intermediate plateaus, indicative of a clean burnout. While these three alternatives demonstrate a higher removal temperature compared to naphthalene, they are all fully removed by 300 °C, which is far from the melting point of the glass frit used in the grinding wheels (generally above 500°C). The behavior shown for palmitic acid 456 is exemplary of the behavior of lauric acid, myristic acid and stearic acid as well.

FIG. 5 illustrates DSC analysis for pore forming components in embodiments of the present invention. The DSC data 500 for the pore formers has also been collected, with an identical ramping rate of 3 °C / min. Interestingly, the DSC spectrum for naphthalene 502 demonstrates two peaks - one sharp endothermic transition 510 at 80 °C, likely due to sublimation, and one broad endothermic transition 520 at 130 °C, which may be a mixture of melting and evaporating. It is important to note that based on the combined TGA and DSC data, only a small fraction of naphthalene, less than 25%, is removed after the first endothermic event. This suggests that most of the naphthalene is removed via melting and evaporation and suggests that alternatives do not necessary have to undergo sublimation in order to have a clean burnout. Benzoic acid 504 shows a similar profile consisting of a sharp endothermic transition, followed by a broad endothermic transition, but at an increased temperature of approximately 50 °C compared to naphthalene. Benzophenone 506 and palmitic acid 508 do not contain an initial sharp endothermic transition, likely suggesting the absence of a sublimation event, where removal of the material is instead occurring through a combined melting and evaporating event. The similar shape of the DSC curves compared to naphthalene suggest that these materials have similar phase transition events upon heating and may act similarly as pore formers in vitrified-bonded grinding wheels.

### EXAMPLES

Objects and advantages of the present disclosure are further illustrated by the following non-limiting examples and comparative examples. The particular materials and amounts thereof recited in these examples, as well as other conditions and details, should not be construed to unduly limit the present disclosure.

Unless otherwise noted, all parts, percentages, ratios, etc. in the Examples and the rest of this specification are by weight. Unless stated otherwise, all reagents were obtained, or are available, from fine chemical vendors such as Sigma-Aldrich Company, St. Louis MO, or may be synthesized by known methods. In Tables in the Examples, "NA" means not applicable.

Porous vitrified-bonded grinding wheels were prepared in accordance with principles of the present disclosure, including the use of benzophenone, benzoic acid, or saturated fatty acids (lauric acid, myristic acid, palmitic acid, stearic acid) as the pore inducing material. Specifically, the wheels were prepared by homogenously dispersing: 1) abrasive particles; 2) binder medium (vitreous bonding medium), liquid temporary binder additive (TBR); 3) molecular pore former (benzophenone, benzoic acid, or saturated fatty acids (lauric acid, myristic acid, palmitic acid, stearic acid)) for 30 minutes at room temperate (20 - 25 °C) by means of a stand mixer, allowing for any organic solvent in the TBR to be removed, yielding a dry and homogeneous abrasive powder. Note that the liquid temporary binder (TBR) can include solutions of dextrins (e.g., potato starch), polysaccharides, polyethylene glycol, polyacrylates, an adhesive, an organic resin (e.g., urea/formaldehyde resin), a wax, or a combination thereof, dispersed in aqueous or organic media.

Afterwards, the dry abrasive mixture was added to a steel mold with dimensions of 190.5 mm (OD) x 12.7 mm (height) x 31.75 mm (ID) and pressed using a hydraulic press until the mold had closed and the set volume reached. The green body wheel was then removed from the mold and heated in the furnace to both remove the molecular pore former and temporary binder material, as well as induce sintering at high temperatures (> 700 °C). The resulting sintered wheel was allowed to cool to room temperature (20 - 25 °C).

The densities of the resulting sintered vitrified-bonded grinding wheels were determined by measuring the mass in grams and then determining the volume based on the measured dimensions, assuming the volume of a hollow cylinder. The Young's modulus, or stiffness, of the grinding wheels were measured with a non-destructive impulse excitation technique instrument, GrindoSonic Mk7. The volume percentage of pore former was held constant at 14.3%, except for benzoic acid due to the availability of that chemical during the time of this experiment. The densities of the resulting wheels were similar, between 1.8 - 1.9 g/cm³. Interestingly, despite this similarity in density, we observe a large range in E-modulus or stiffness of the wheel, between 16 - 27 kN/mm². This range in E-modulus seems to correlate with the pressure required to close the mold, where higher pressures lead to lower E-modulus or stiffness values. The difference in pressure required to close the mold might suggest a difference in compressibility of the different pore former material, where palmitic acid appears to have greater compressibility compared to benzoic acid and benzophenone.

**Table 1. Physical characterization of vitrified-bonded grinding wheels prepared with alternative pore former materials.**

| **Pore Former** | **Vol. % of Pore Former** | **Density of Pore Former (g/cm³)** | **Density of wheel (g/cm³)** | **E-Modulus of wheel (kN/mm²)** | **Pressure to close (tons)** | **Thickness of wheel (mm)** |
|---|---|---|---|---|---|---|
| Benzophenone (20-24) | 14.3 | 1.11 | 1.81 | 20.2 | 80 | 13.5 |
| Benzophenone (25-35) | 14.3 | 1.11 | 1.83 | 24.7 | 60 | 13.2 |
| Benzoic acid (fine powder) | 12.8 | 1.27 | 1.87 | 25.6 | 60 | 13.1 |
| Palmitic acid | 14.3 | 0.852 | 1.85 | 26.9 | 20 | 13.1 |
| None | 0 | 0 | 1.85 | 15.9 | 10 | 13.1 |
| Napthalene 99DA F15VPLFV901W | 14.3 | 1.15 | 1.80 | 27 | - | 19.9 |

Methods of manufacturing bonded abrasive articles of the present disclosure provide a marked improvement over previous techniques. Use of these molecular pore inducing materials readily generate desired porosity in the resultant bonded abrasive article using conventional manufacturing conditions and does not give rise to environmental handling concerns. The molecular pore inducing materials of the present disclosure have minimal, if any, negative affect upon designed geometries of the resultant bonded abrasive article and demonstrate a significantly higher LD₅₀ level.

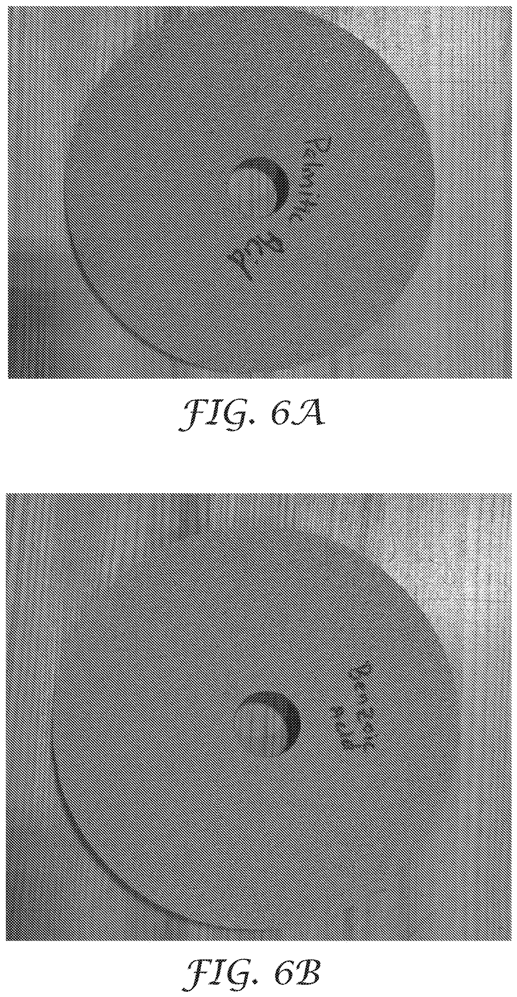

FIGS. 6A and 6B illustrate images of bonded abrasive articles in accordance with the present invention. FIG. 6A illustrates a bonded abrasive wheel formed using palmitic acid as a pore forming compound, while FIG. 6B illustrates a bonded abrasive wheel formed using benzoic acid as a pore forming compound.

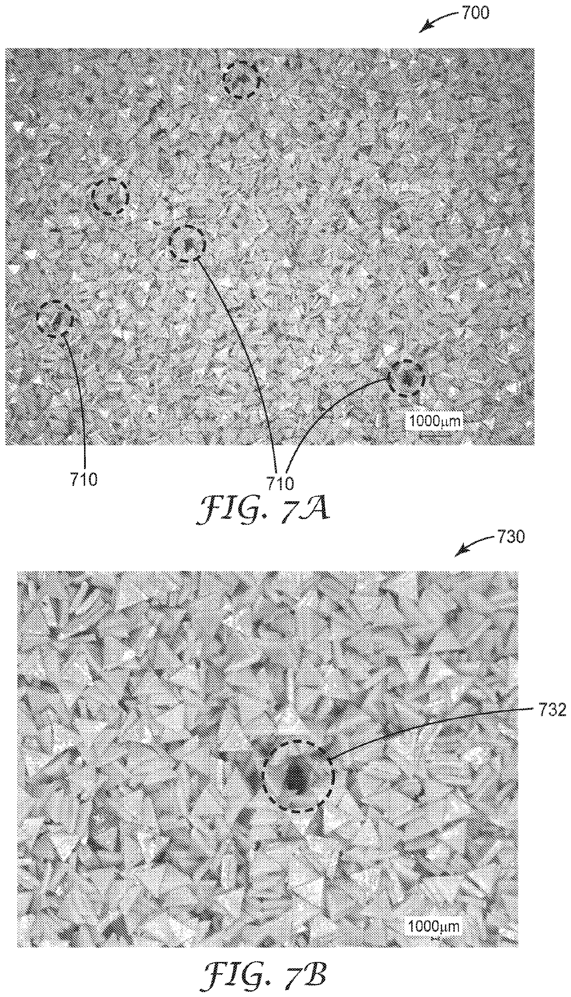

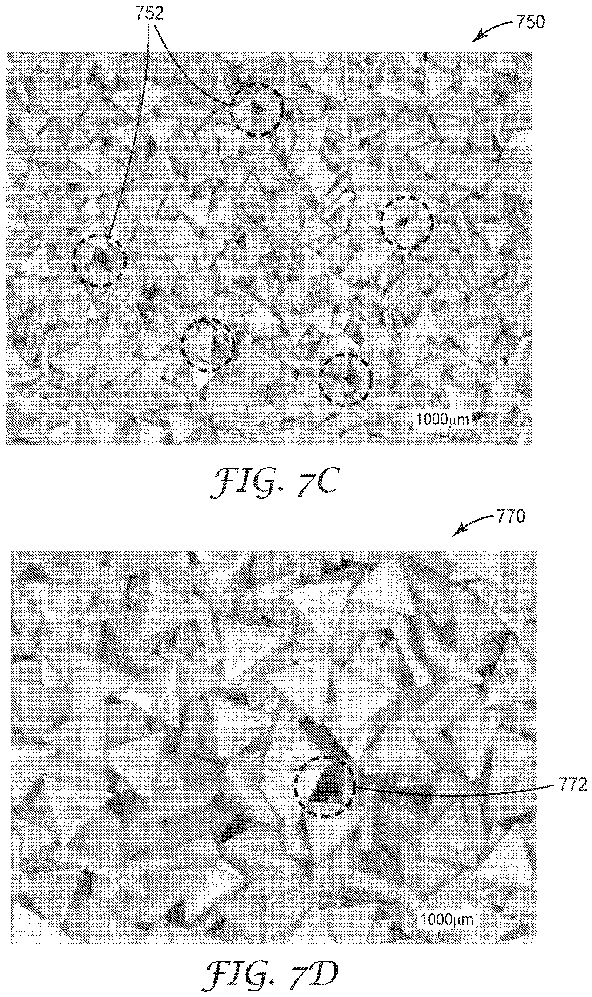

FIGS. 7A-7D illustrate discrete pores visible in bonded abrasive articles made according to the processes discussed above. FIGS. 7A and 7B illustrates magnified views 700 and 730 of an abrasive article formed using benzophenone as a pore forming compound. FIG. 7A illustrates a plurality of pores 710. FIG. 7B illustrates a close-up view of a pore 732. FIGS. 7C and 7D illustrate magnified views 750 and 770 of an abrasive article formed using palmitic acid as a pore forming compound. FIG. 7C illustrates a plurality of pores 752, while FIG. 7D illustrates a close up view of a pore 772.

A method for manufacturing a bonded abrasive article is presented. The method includes preparing a bondable abrasive composition including abrasive particles, a binder medium and an environmentally benign pore inducing material. The environmentally benign pore inducing material is nonflammable. The method also includes forming a precursor abrasive structure from the bondable abrasive composition. The method also includes removing the pore inducing material from the precursor abrasive structure to provide a porous precursor abrasive structure. The method also includes processing the porous precursor abrasive structure to provide a bonded abrasive article.

The pore-inducing material can be a ketone.

The pore-inducing material can be benzophenone.

The pore-inducing material can be a monocarboxylic acid.

The pore-inducing material can be an aromatic monocarboxylic acid.

The pore-inducing material can be benzoic acid.

The pore-inducing material can be an aliphatic monocarboxylic acid.

The pore-inducing material can be selected from the group consisting of: lauric acid, myristic acid, palmitic acid, and stearic acid.

The pore-inducing material may have no reactive byproducts during heating.

The pore-inducing material can be substantially insoluble in water.

The pore-inducing material may burn, sublimate or evaporate out at a temperature below 700°C.

The pore-inducing material may burn, sublimate or evaporate out at a temperature below 600°C.

The pore-inducing material may burn, sublimate or evaporate out at a temperature below 500°C.

The step of forming a precursor abrasive structure can include molding the bondable abrasive composition.

The binder medium can include a vitreous bonding material.

The binder medium may further include a temporary binder.

The temporary binder can be an aqueous binder.

The temporary binder can be a nonaqueous binder.

The step of removing the pore inducing material can include heating the precursor abrasive structure.

The bondable abrasive composition can be characterized by the absence of naphthalene.

The step of processing the porous precursor abrasive structure can include heating the porous precursor abrasive structure.

The bonding medium can be a vitreous bonding medium. The step of processing the porous precursor abrasive structure can include subjecting the porous precursor abrasive structure to a temperature of not less than about 500 °C.

The temperature can be greater than about 600 °C.

The temperature can be greater than about 700 °C.

The bonded abrasive article can be a vitrified bonded grinding wheel.

The environmentally benign pore former can have an LD₅₀ value of at least 600.

The environmentally benign pore former can have an LD₅₀ value of at least 1000.

The environmentally benign pore former can have an LD₅₀ value of at least 1500.

The environmentally benign pore former can have an LD₅₀ value of at least 2000.

The environmentally benign pore former can have an LD₅₀ value of at least 2500.

The environmentally benign pore former can have an LD₅₀ value of at least 5000.

The environmentally benign pore former can have an LD₅₀ value of at least 10,000.

A bondable abrasive composition for use in forming a bonded abrasive article is presented. The bonded abrasive composition includes abrasive particles, a binder medium, and a pore inducing material that has no reactive byproducts during heating. The pore inducing material is completely burned out, sublimated out, or evaporated out at a temperature below about 700°C. The pore inducing material has an LD₅₀ value of at least 600.

The nontoxic pore inducing material may be completely burned out, sublimated out, or evaporated out at a temperature below about 600°C.

The nontoxic pore inducing material may be completely burned out, sublimated out, or evaporated out at a temperature below about 500°C.

The pore inducing material may be selected from the group consisting of: benzophenone, benzoic acid, lauric acid, myristic acid, palmitic acid, and stearic acid.

The bondable abrasive composition can be characterized by the absence of naphthalene.

The pore-inducing material may be a ketone.

The pore-inducing material may be a monocarboxylic acid.

The pore-inducing material may be an aromatic monocarboxylic acid.

The pore-inducing material may be an aliphatic monocarboxylic acid.

The pore-inducing material may be substantially insoluble in water.

The binder medium may include a vitreous bonding material.

The binder medium further can include a temporary binder.

The temporary binder can be an aqueous binder.

The temporary binder can be a nonaqueous binder.

The environmentally benign pore former can have an LD₅₀ value of at least 700.

The environmentally benign pore former can have an LD₅₀ value of at least 900.

The environmentally benign pore former can have an LD₅₀ value of at least 1,000.

The environmentally benign pore former can have an LD₅₀ value of at least 1,500.

The environmentally benign pore former can have an LD₅₀ value of at least 2,500.

The environmentally benign pore former may have an LD₅₀ value of at least 5,000.

The environmentally benign pore former may have an LD₅₀ value of at least 10,000.

A precursor abrasive structure for use in forming a bonded abrasive article, the precursor abrasive structure is presented. The precursor abrasive structure includes abrasive particles, a binder medium, and a pore inducing material. The pore inducing material is not flammable and is substantially insoluble in water.

The pore inducing material can be selected from the group consisting of: benzophenone, benzoic acid, lauric acid, myristic acid, palmitic acid, and stearic acid.

The precursor abrasive structure can be characterized by the absence of naphthalene.

The pore-inducing material can be a ketone.

The pore-inducing material can be a monocarboxylic acid.

The pore-inducing material can be an aromatic monocarboxylic acid.

The pore-inducing material can be an aliphatic monocarboxylic acid.

The pore-inducing material can be substantially insoluble in water.

The binder medium can include a vitreous bonding material.

The binder medium can further include a water-based temporary binder.

The pore-inducing material can include a single chemical comprising only carbon, hydrogen and oxygen atoms.

Although the present disclosure has been described with reference to preferred embodiments, workers skilled in the art will recognize that changes can be made in form and detail without departing from the spirit and scope of the present disclosure.

The following aspects are preferred embodiments of the invention:
1. A bondable abrasive composition for use in forming a bonded abrasive article, the bondable abrasive composition including:
   abrasive particles;
   a binder medium; and
   a pore inducing material that has no reactive byproducts during heating, and is completely burned out, sublimated out, or evaporated out at a temperature below about 700°C, wherein the pore inducing material has an LD₅₀ value of at least 600.
2. The bonded abrasive composition of aspect 1, wherein the nontoxic pore inducing material is completely burned out, sublimated out, or evaporated out at a temperature below about 600°C.
3. The bonded abrasive composition of aspect 1, wherein the nontoxic pore inducing material is completely burned out, sublimated out, or evaporated out at a temperature below about 500°C.
4. The bondable abrasive composition of any of aspects 1-3, wherein the pore inducing material is selected from the group consisting of: benzophenone, benzoic acid, lauric acid, myristic acid, palmitic acid, and stearic acid.
5. The bondable abrasive composition of any of aspects 1-4, characterized by the absence of naphthalene.
6. The bondable abrasive composition of any of aspects 1-5, wherein the pore-inducing material is a ketone.
7. The bondable abrasive composition of any of aspects 1-6, wherein the pore-inducing material is a monocarboxylic acid.
8. The bondable abrasive composition of aspect 7, wherein the pore-inducing material is an aromatic monocarboxylic acid.
9. The bondable abrasive composition of aspect 7, wherein the pore-inducing material is an aliphatic monocarboxylic acid.
10. The bondable abrasive composition of any of aspects 1-9, wherein the pore-inducing material is substantially insoluble in water.
11. The bondable abrasive composition of any of aspects 1-10, wherein the binder medium includes a vitreous bonding material.
12. The bondable abrasive composition of aspect 11, wherein the binder medium further includes a temporary binder.
13. The bonded abrasive composition of aspect 12, wherein the temporary binder is an aqueous binder.
14. The bonded abrasive composition of aspect 12, wherein the temporary binder is a nonaqueous binder.
15. The bonded abrasive composition of any of aspects 1-14, wherein the environmentally benign pore former has an LD₅₀ value of at least 700.
16. The bonded abrasive composition of any of aspects 1-15, wherein the environmentally benign pore former has an LD₅₀ value of at least 900.
17. The bonded abrasive composition of any of aspects 1-16, wherein the environmentally benign pore former has an LD₅₀ value of at least 1,000.
18. The bonded abrasive composition of any of aspects 1-17, wherein the environmentally benign pore former has an LD₅₀ value of at least 1,500.
19. The bonded abrasive composition of any of aspects 1-18, wherein the environmentally benign pore former has an LD₅₀ value of at least 2,500.
20. The bonded abrasive composition of any of aspects 1-19, wherein the environmentally benign pore former has an LD₅₀ value of at least 5,000.
21. The bonded abrasive composition of any of aspects 1-20, wherein the environmentally benign pore former has an LD₅₀ value of at least 10,000.
22. A precursor abrasive structure for use in forming a bonded abrasive article, the precursor abrasive structure including:
   abrasive particles;
   a binder medium; and
   a pore inducing material, wherein the pore inducing material is not flammable and is substantially insoluble in water.
23. The precursor abrasive structure of aspect 22, wherein the pore inducing material is selected from the group consisting of: benzophenone, benzoic acid, lauric acid, myristic acid, palmitic acid, and stearic acid.
24. The precursor abrasive structure of aspect 22 or 23, characterized by the absence of naphthalene.
25. The precursor abrasive structure of any of aspects 22-24, wherein the pore-inducing material is a ketone.
26. The precursor abrasive structure of any of aspects 22-25, wherein the pore-inducing material is a monocarboxylic acid.
27. The precursor abrasive structure of aspect 26, wherein the pore-inducing material is an aromatic monocarboxylic acid.
28. The precursor abrasive structure of aspect 26, wherein the pore-inducing material is an aliphatic monocarboxylic acid.
29. The precursor abrasive structure of any of aspects 22-28, wherein the pore-inducing material is substantially insoluble in water.
30. The precursor abrasive structure of any of aspects 22-29, wherein the binder medium includes a vitreous bonding material.
31. The precursor abrasive structure of aspect 30, wherein the binder medium further includes a water-based temporary binder.
32. The precursor abrasive structure of any of aspects 31, wherein the pore-inducing material comprises a single chemical comprising only carbon, hydrogen and oxygen atoms.

## Claims

1. A precursor abrasive structure for use in forming a bonded abrasive article, the precursor abrasive structure including: abrasive particles; a binder medium; and a pore inducing material, wherein the pore inducing material is not flammable and is substantially insoluble in water.

2. The precursor abrasive structure of claim 1, wherein the pore inducing material is selected from the group consisting of: benzophenone, benzoic acid, lauric acid, myristic acid, palmitic acid, and stearic acid.

3. The precursor abrasive structure of claim 1 or 2, **characterized by** the absence of naphthalene.

4. The precursor abrasive structure of any of claims 1-3, wherein the pore-inducing material is a ketone.

5. The precursor abrasive structure of any of claims 1-4, wherein the pore-inducing material is a monocarboxylic acid.

6. The precursor abrasive structure of claim 5, wherein the pore-inducing material is an aromatic monocarboxylic acid.

7. The precursor abrasive structure of claim 5, wherein the pore-inducing material is an aliphatic monocarboxylic acid.

8. The precursor abrasive structure of any of claims 1-7, wherein the pore-inducing material is substantially insoluble in water.

9. The precursor abrasive structure of any of claims 1-8, wherein the binder medium includes a vitreous bonding material.

10. The precursor abrasive structure of claim 9, wherein the binder medium further includes a water-based temporary binder.

11. The precursor abrasive structure of any of claims 10, wherein the pore-inducing material comprises a single chemical comprising only carbon, hydrogen and oxygen atoms.
